Europäisches Patentamt

European Patent Office

Office européen des brevets

(19)

(11) Veröffentlichungsnummer: **0 221 939**
**B1**

(12) **EUROPÄISCHE PATENTSCHRIFT**

(45) Veröffentlichungstag der Patentschrift: 01.08.90

(51) Int. Cl.⁵: **H 02 P 6/02**

(21) Anmeldenummer: **86902829.0**

(22) Anmeldetag: **22.04.86**

(86) Internationale Anmeldenummer:
**PCT/EP86/00243**

(87) Internationale Veröffentlichungsnummer:
**WO 86/06893 20.11.86 Gazette 86/25**

(54) SCHALTUNG ZUR STEUERUNG EINES BÜRSTENLOSEN ELEKTROMOTORS.

(30) Priorität: **15.05.85 DE 3517570**

(43) Veröffentlichungstag der Anmeldung:
**20.05.87 Patentblatt 87/21**

(45) Bekanntmachung des Hinweises auf die
Patenterteilung:
**01.08.90 Patentblatt 90/31**

(84) Benannte Vertragsstaaten:
**AT BE CH DE FR GB IT LI LU NL SE**

(56) Entgegenhaltungen:
**CA-A- 475 667**
**DE-A-1 538 893**
**DE-A-1 538 916**
**DE-A-2 716 270**

**Machine Design, vol. 57, Nr. 10, 1985 (US) "AC drives move into DC territory", pages 62-64**
**Lexikon der Elektronik, Neufang, VIEWEG 1983, Seite 372**

(73) Patentinhaber: **DEUTSCHE THOMSON-BRANDT GMBH**
**D-7730 Villingen-Schwenningen (DE)**

(72) Erfinder: **RILLY, Gerard**
**Panoramaweg 6**
**D-7731 Unterkirnach (DE)**

**Beschreibung**

Die Erfindung geht aus von einer Schaltung gemäß dem Oberbegriff des Anspruchs 1. Eine derartige Schaltung ist bekannt durch die DE—OS—15 38 916, 15 38 893.

Die höchste Drehzahl des Motors ist dabei durch die Netzfrequenz vorgegeben und beträgt z.B. bei einpoliger Ausführung 3000 Upm. Eine höhere Drehzahl läßt sich mit dieser bekannten Schaltung ohne weiteres nicht erreichen.

In der Praxis werden jedoch oft Motoren mit einer höheren Drehzahl von z.B. 6000—9000 Upm benötigt.

Der Erfindung liegt die Aufgabe zugrunde, die bekannte Schaltung so weiterzubilden, daß der Motor auch mit einer höheren Drehzahl betrieben werden kann, als es Netzfrequenz entspricht.

Diese Aufgabe wird durch die im Anspruch 1 beschriebene Erfindung gelöst. Vorteilhafte Weiterbildungen der Erfindung sind in den Unteransprüche beschrieben.

Bei der Erfindung wird also mit der Impuls-Steuerschaltung eine Netzperiode mehrmals angeschnitten. Diese Maßnahme allein führt noch nicht zu einer erhöhten Drehzahl. Wenn jedoch die durch die Impulssteuerung gewonnenen Stromimpulse der Statorwicklung im Sinne der Erzeugung entgegengesetzter Magnetpole zugeführt werden, kann ein Drehfeld erzeugt werden, dessen Frequenz höher ist als die Netzfrequenz. Die Frequenz des erzeugten Drehfeldes kann dann z.B. gleich der doppelten, dreifachen oder vierfachen Netzfrequenz sein. Das bedeutet, daß die Drehzahl des Motors entsprechend höher sein kann, als es dem Synchronbetrieb mit der Netzfrequenz entspricht.

Die Zuführung der durch die Impulssteuerung gewonnenen Stromimpulse zu der Statorwicklung muß je nach dei gewünschten Drehzahl so erfolgen, daß z.B. Ströme entgegengesetzter Polarität in der Statorwicklung gleiche Magnetpole, z.B. Nord, oder auch Ströme gleicher Polarität unterschiedliche Magnetpole, also Nord und Süd, erzeugen. Gemäß einer Weiterbildung der Erfindung ist dies dadurch erreicht, daß die Statorwicklung in zwei entgegengesetzt gepolte Teilwicklungen aufgeteilt ist und die Stromimpulse abwechselnd der einen oder anderen Teilwicklung zugeführt werden. Die Umkehr der Magnetpole erfolgt dann durch die entgegengesetzte Polung der Teilwicklung.

Gemäß einer anderen Weiterbildung der Erfindung ist die Statorwicklung in der Diagonalen einer Brücke angeordnet, die von der Netzspannung gespeist ist und in den Brückenzweigen vier steuerbare Schalter, insbesondere Triacs, aufweist. Mit einer solchen Schaltung kann jeweil durch Zünden diagonal gegenüberliegender Schalter die Stromrichtung in der Wicklung umgepolt werden. Dann ist die Aufteilung der Wicklung in zwei Teilwicklungen nicht notwendig.

Die Erfindung wird im folgenden anhand der Zeichnung näher erläutert. Darin zeigen

Fig. 1 ein Prinzipschaltbild der erfindungsgemäßen Steuerung,

Fig. 2 ideolisieite Kurven zur Erläuterung der Schaltung nach Fig. 1,

Fig. 3 eine Weiterbildung der Schaltung nach Fig. 1

Fig. 4 ein Beispiel für die Steuerung der Statorwicklung mittels einer Brückenschaltung.

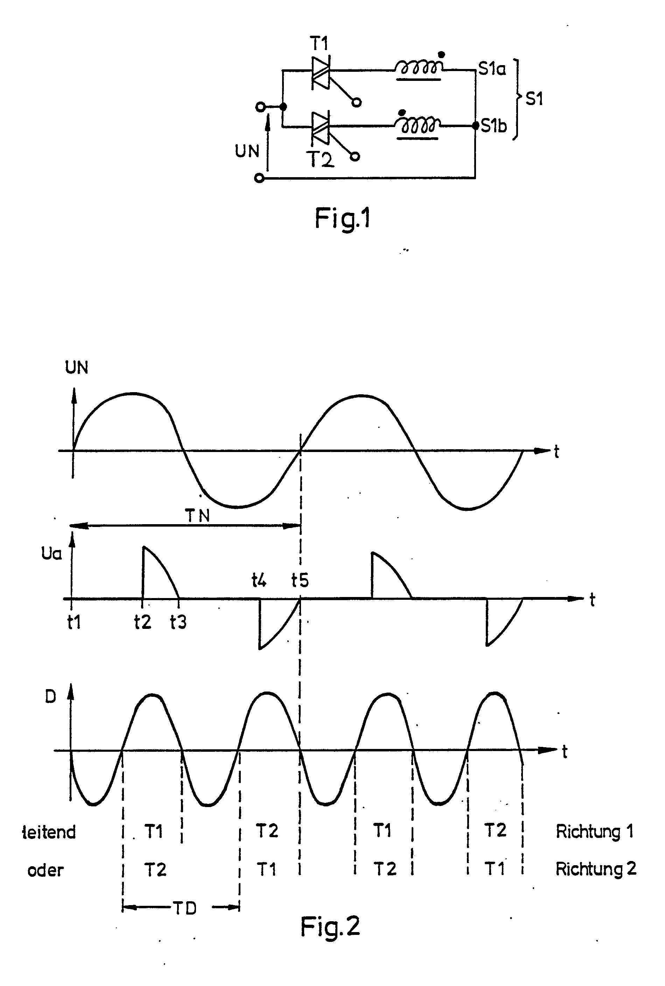

In Fig. 1 ist die Statorwicklung S1 in zwei entgegengesetzt gepolte Teilwicklungen S1a und S1b aufgeteilt, die über zwei Triacs T1 und T2 an die Netzspannung UN angeschlossen sind.

Fig. 2 zeigt die Netzspannung UN mit der Netzperiode TN von t1—t5. Die Netzspannung UN wird mit den Triacs T1, T2 jeweils während einer Netzperiode TN über zwei Winkelbereiche, nämlich von t2 bis t3 und von t4 bis t5 angesteueit, wobei das Triac T1 von t2 bis t3 und das Triac T2 von t4 bis t5 leitend ist. Dieser Vorgang wiederholt sich dann für jede Netzperiode TN. Die von t2 bis t3 und von t4 bis t5 gewonnenen Stromimpulse werden den beiden Teilwicklungen S1a und S1b zugeführt. Da diese Teilwicklungen entgegengesetzt gepolt sind, erzeugen die ebenfalls entgegengesetzten Stromimpulse gleiche Magnetpole. Dadurch ergibt sich ein Drehfeld D mit einer Periodendauer TD. Es ist ersichtlich, daß die Periodendauer TD des Drehfeldes D nur die Hälfte der Netzperiode TN beträgt. Wenn der Stator somit durch des Drehfeld D angetrieben wird, läuft der Motor mit der doppelten Netzfrequenz, also z.B. mit 6000 Upm. Die Stromimpulse von t2 bis t3 und t4 bis t5 bilden jeweils zusammen mit der in der Statorwicklung induzierten EMK die der Statorwicklung zugeführte Leistung, die die Größe des auf den Rotor ausgeübten Drehmomentes bestimmt.

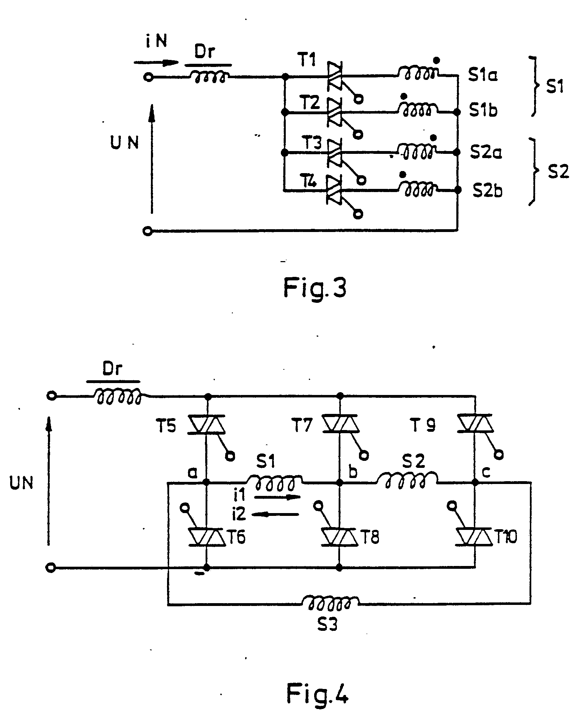

Die Schaltung nach Fig. 1 stellt somit die einfachste Version dar, bei der der Antrieb des Rotors mit nur einer einzigen Wicklung erfolgt. Ein derartiger Antrieb ist möglich, wenn der Start durch Hilfsmittel eingeleitet wird. Diese Hilfsmittel können z.B. in einer sogenannten Positionierung bestehen. Dabei wird der Rotor automatisch immer in einer solchen Stellung angehalten, aus der heraus er auch mit einer einzigen Wicklung gestartet werden kann. Dabei liegt die Ausgangsstellung des Rotors nicht in einem Nullpunkt des von der Statorwicklung auf den Rotor ausgeübten Drehmoments. Der Start kann auch mit einer zweiten Wicklung erfolgen, die gegenüber der Statorwicklung räumlich versetzt ist und mit einem zum Starten dienenden Strom oder ständig vom Netz gespeist wird. Im eingelaufenen Betrieb kann der Motor mit nur einer Wicklung gemäß Fig. 1 und mit einer gegenüber der Netzfrequenz erhöhten Drehzahl laufen. In Fig. 3 sind zwei Statorwicklungen S1 und S2 vorgesehen, die beide in Teilwicklungen S1a und S1b sowie S2a und S2b aufgeteilt sind. Die beiden Statorwicklungen S1 und S2 sind um 90° räumlich versetzt angeordnet. Beide Wicklungen S1 und S2 werden gemäß Fig. 2 gesteuert, wobei lediglich die Phasenlage der Ansteuerung um 90° von TD versetzt ist. Die in den beiden Spulen S1 und S2 erzeugten Drehfelder D gemäß Fig. 2 haben dann also den gleichen Verlauf, sind jedoch in der Phase um 90° bezogen auf die Frequenz des Drehfeldes D gegeneinander verschoben. Dies wird erreicht durch entsprechende Lage der Winkel der Impulssteuerung.

Die in Fig. 3 dargestellte Drossel Dr hat folgenden Zweck: Die Impulssteuerung erzeugt eine Vielzahl kurzer Stromimpulse, da z.B. in Fig. 3 die Triacs T1 bis T3 zeitlich nacheinander gezündet werden. Die dadurch auftretenden hohen Frequenzen der dem Netz entnommenen Ströme können gegen Vorschriften hinsichtlich der Netzbelastung verstoßen und zu Störungen führen. Die Drossel Dr dient zur Glättung des dem Netz entnommenen Stromes iN, d.h. zu Siebung oder Integration dieses Stromes in dem Sinne, daß der Strom iN weitestgehend sinusförmig ist.

In Fig. 4 ist die Wicklung S1 nicht in zwei Teilwicklungen aufgeteilt, sondern liegt in der Diagonalen a—b einer die Netzspannung UN angeschlossenen Brücke mit den Triacs T5, T6, T7, T8. Die Triacs können so gezündet werden, daß der Strom i in der Wicklung S1 umgepolt werden kann. Wenn z.B. die Netzspannung UN positiv ist und die Triacs T5 und T8 gezündet sind, fließt durch die Wicklung S1 der Strom i1 in der dargestellten Richtung. Wenn bei gleicher Polarität der Netzspannung UN die Triacs T6 und T7 gezündet sind, fließt der Strom i2 in der entgegengesetzten Richtung. Mit dieser Schaltung kann somit durch entsprechende Steuerung der Triacs T5 bis T8 die jeweils gewünschte Wirkung des Stromes auf das Magnetfeld, also bewußte Erzeugung eines Nordpols oder Südpols, unabhängig von der ursprünglichen Polarität des Stromes erreicht werden.

In Fig. 4 ist die Brücke mit den Triacs T5 bis T8 noch durch einen zusätzlichen Brückenzweig mit den Triacs T9, T10 erweitert, in dessen Diagonale b—c die zweite Statorwicklung S2 liegt. Durch entsprechende Steuerung der Triacs T5 bis T10 können z.B. die Wicklungen S1, S2 so gesteuert werden, wie es anhand der Fig. 3 für diese Wicklungen beschrieben ist. Zwischen die Diagonalpunkte a und c kann noch eine dritte Statorwicklung S3 geschaltet sein. Dadurch ergibt sich ein symmetrischer Aufbau mit drei gleichwertigen Statorwicklungen S1, S2, S3. Diese Wicklungen sind dann räumlich um 120° versetzt für einen sogenannten Dreiphasenbetrieb angeordnet. Dieser symmetrische Dreiphasenbetrieb ermöglicht es, die zu Glättung des Stromes dienende Drossel Dr kleiner auszubilden.

Wie beschrieben, werden in Fig. 3 und 4 mehrere Triacs zeitlich nacheinander zur Erzeugung der Ströme mit der jeweils gewünschten Polarität gezündet. Für die abwechselnde Zündung und Löschung der Triacs kann zusätzlich folgender Effekt ausgenutzt werden.

Es sei angenommen, daß zunächst das Triac T1 durch einen Steuerimpuls gezündet ist. Noch während dieser Zeit wird das Triac T2 durch einen Steuerimpuls gezündet. Dadurch entsteht in der dem Triac T2 zugeordneten Statorwicklung eine EMK. Diese EMK kann so auf das Triac T1 einwirken, daß dieses in erwünschter Weise gelöscht wird. Auf diese Weise kann also die Zündung des Triac T2 die Umschaltung von dem Triac T1 auf das Triac T2 zwangsläufig bewirken.

Bei den beschriebenen Beispielen erfolgte eine Verdoppelung der Drehzahlen. Bei einer Netzfrequenz von 50 Hz kann dann eine Drehzahl von 6000 Upm erreicht werden. Ebenso ist es möglich, noch höhere Drehzahlen von z.B. 9000 Upm zu erreichen. Zu diesem Zweck wird dann jeweils eine Netzperiode entsprechend häufig angesteuert, und die gewonnenen Stromimpulse wirken mit solcher Wirkung auf die Magnetpole, also Nord oder Süd, daß sich wie in Fig. 2 ein Drehfeld D mit einer entsprechend geringen Periodedauer TD ergibt.

Die Schaltung nach Fig. 4 kann grundsätzlich nur mit den vier Triacs T5, T6, T7, T8 und der Wicklung S1 betrieben werden. Sie arbeitet dann wie die Schaltung nach Fig. 1 ohne Aufteilung der Wicklung. Die Schaltung kann auch mit den sechs Triacs T5—T10 und den beiden Wicklungen S1 und S2 betrieben werden. Sie wirkt dann wie die Schaltung nach Fig. 3, ebenfalls ohne Aufteilung der Wicklungen. Die Schaltung kann ebenso mit den sechs Triacs T5—T10 und den drei Wicklungen S1, S2 und S3 betrieben werden, um das genannte symmetrische Drehfeld zu erzeugen. Zur Ansteuerung der Wicklung S3 werden dabei die Triacs T5 und T10 oder für die umgekehrte Stromrichtung die Triacs T9 und T6 leitend gesteuert. Die Ansteuerung der Triacs T5—T10 für die Ströme in den Wicklungen S1, S2 und S3 erfolgt dann mit derart unterschiedlicher Phase, daß die drei Wicklungen S1—S3 gleiche, in der Phase um 120° gegeneinander verschobene Drehfelder erzeugen.

## Patentansprüche

1. Schaltung zur Steuerung eines bürstenlosen Elektromotors mit permanentmagnetischem Rotor am Einphasennetz, bei der die Statorwicklung (S1, S2) über elektronisch steuerbare Schalter (T1, T2) an das Netz (UN) angeschlossen und an die Steuerelektroden der Schalter (T1, T2) im Sinne einer Impulssteuerung aus der Rotorstellung abgeleitete Steuerspannungen angelegt sind, dadurch gekennzeichnet, daß die Impulssteuerung während einer halben Netzperiode (NT) mehrmals während verschiedener Winkelbereiche betätigt wird und die dadurch erzeugten Stromimpulse der Statorwicklung (S) im Sinne der Erzeugung entgegengesetzter Magnetpole (N/S) derart zugeführt werden, daß ein Drehfeld (D) mit einem ganzzahligen Vielfachen der Netzfrequenz entsteht.

2. Schaltung nach Anspruch 1, dadurch gekennzeichnet, daß die Statorwicklung (S1) in zwei entgegengesetzt gepolte Teilwicklungen (S1a, S1b) aufgeteilt ist und die Stromimpulse abwechselnd der ersten Teilwicklung (S1a) und der zweiten Teilwicklung (S1b) zugeführt werden.

3. Schaltung nach Anspruch 1, dadurch gekennzeichnet, daß die Wicklung (S1, S2) in der Diagonalen (a—b) einer aus vier Schaltern (T5—T8) gebildeten und mit der Netzspannung (UN) gespeisten Brücke liegt und während der Winkelbereiche abwechselnd jeweils zwei einander diametral gegenüber liegende Schalter (T5 und T8 oder T6 und T7) leitend gesteuert sind (Fig. 4).

4. Schaltung nach Anspruch 3, dadurch gekennzeichnet, daß der Brücke (T5—T8) ein dritter Längszweig mit zwei Schaltern (T9, T10) zugeordnet ist, der mit der Brücke eine zweite Diagonale (b, c) bildet, in der eine zweite Statorwicklung (S2) liegt.

5. Schaltung nach Anspruch 4, dadurch gekennzeichnet, daß an die beiden Enden der nicht miteinander verbundenen Punkte (a, c) der beiden Diagonalen (a, b; b, c) eine dritte Statorwicklung (S3) angeschlossen ist.

6. Schaltung nach Anspruch 1, dadurch gekennzeichnet, daß die Winkelbereiche (t2—t3, t4—t5) immer dieselbe Phasenlage innerhalb der Netzperiode (TN) haben.

7. Schaltung nach Anspruch 1, dadurch gekennzeichnet, daß im Stromweg vom Netz eine Drossel (Dr) liegt, die zur Unterdrückung von Oberwellen in dem dem Netz entnommenen Strom (iN) dient.

8. Schaltung nach Anspruch 1, dadurch gekennzeichnet, daß bei einer Vielzahl von Schaltern (T1—T10), die zeitlich nacheinander leitend gesteuert sind und die Impulslängen bestimmen, die beim Zünden eines Schalters in der zugehörigen Wicklung erzeugte EMK zur Sperrung eines vorher leitenden Schalters ausgenutzt wird.

## Revendications

1. Circuit pour la commande d'un moteur électrique sans balais à rotor à aimantation permanente, alimenté par le secteur monophasé, dans lequel l'enroulement statorique (S1, S2) est relié au secteur (UN) par des commutateurs à commande électronique (T1, T2) et des tensions de commande dérivées de la position du rotor sont appliquées aux électrodes de commande des commutateurs (T1, T2) dans le sens d'une commande par impulsions, caractérisé en ce qu'au cours d'une demi—période du secteur (TN), la commande par impulsions est commutée plusieurs fois pendant des zones angulaires différentes et que les impulsions de courant ainsi générées sont envoyées à l'enroulement statorique (S) dans le sens d'une création de pôles magnétiques contraires (N/S) de façon à engendrer un champ tournant (D) d'un multiple entier de la fréquence du secteur.

2. Circuit selon la revendication 1, caractérisé en ce que l'enroulement statorique (S1) est divisé en deux enroulements partiels (S1a, S1b) de polarité contraire et que les impulsions de courant sont envoyées alternativement au premier enroulement partiel (S1a) et au deuxième enroulement partiel (S1b).

3. Circuit selon la revendication 1, caractérisé en ce que l'enroulement (S1, S2) est disposé dans la diagonale (a—b) d'un pont, formé par quatre commutateurs (T5 à T8), et alimenté par la tension du secteur et que, pendant les zones angulaires, deux commutateurs opposés (T5 et T8 ou T6 et T7) sont alternativement rendus passants (Fig. 4).

4. Circuit selon la revendication 3, caractérisé en ce qu'au pont (T5 à T8) est associé un troisième bras longitudinal comportant deux commutateurs (T9, T10) qui forme avec le pont une deuxième diagonale (b, c) dans laquelle se trouve un deuxième enroulement statorique (S2).

5. Circuit selon la revendication 4, caractérisé en ce qu'un troisième enroulement statorique (S3) est raccordé aux deux extrémités des points non reliés entre eux (a, c) des deux diagonales (a, b; b, c).

6. Circuit selon la revendication 1, caractérisé en ce que les zones angulaires (t2—t3, t4—t5) ont toujours la même phase à l'intérieur de la période du secteur (TN).

7. Circuit selon la revendication 1, caractérisé en ce qu'une bobine de self (Dr) se trouve sur le trajet du courant venant du secteur pour supprimer les harmoniques dans le courant (iN) prélevé du secteur.

8. Circuit selon la revendication 1, caractérisé en ce qu'en cas d'un grand nombre de commutateurs (T1 à T10), qui sont rendus passant successivement dans le temps et qui déterminent les largeurs des impulsions, la FEM créée lors de l'amorçage d'un commutateur dans l'enroulement associé est utilisée pour le blocage d'un commutateur auparavant passant.

## Claims

1. A circuit for controlling a brushless electric motor with a permanent-magnet rotor on the single-phase mains, wherein the stator winding (S1, S2) is connected to the mains (UN) via switches (T1, T2) which can be controlled electronically, and control voltages derived from the rotor position are applied to the control electrodes of the switches (T1, T2) in the sense of a pulsed control, characterised in that the pulsed control is repeatedly actuated during various angular ranges during a half mains cycle (NT), and the current pulses produced as a result are supplied to the stator winding (S) in the sense of producing opposite magnetic poles (N/S) in such a manner that a rotating field (D) with an integral multiple of the mains frequency results.

2. A circuit according to Claim 1, characterised in that the stator winding (S1) is divided into two oppositely poled component windings (S1a, S1b), and the current pulses are supplied alternately to the first component winding (S1a) and to the second component winding (S1b).

3. A circuit according to Claim 1, characterised in that the winding (S1, S2) lies in the diagonals (a—b) of a bridge formed from four switches (T5—T8) and fed with the mains voltage (UN), and during the angular ranges, two switches at a time (T5 and T8 or T6 and T7), which are situated diametrically opposite one another, are controlled alternately so as to be conducting (Figure 4).

4. A circuit according to Claim 3, characterised in that, associated with the bridge (T5—T8) is a third series arm with two switches (T9, T10) which, with the bridge, forms a second diagonal (b, c) into which a second stator winding (S2) is connected.

5. A circuit according to Claim 4, characterised in that a third stator winding (S3) is connected to the two ends of the points (a, c) of the two diagonals (a, b; b, c), which points are not connected to one another.

6. A circuit according to Claim 1, characterised in that the angular ranges (t2—t3; t4—t5) always have the same phase position within the mains cycle (TN).

7. A circuit according to Claim 1, characterised in that connected into the current path from the mains is a choke (Dr) which serves to suppress harmonics in the current (iN) drawn from the mains.

8. A circuit according to Claim 1, characterised in that with a plurality of switches (T1—T10) which are controlled so as to be conducting successively in time and which determine the pulse lengths, the e.m.f. produced in the associated winding on firing of a switch is utilized to block a switch which was previously conducting.

EP 0 221 939 B1

Fig.1

Fig.2

1

Fig.3

Fig.4